# EUROPÄISCHE PATENTSCHRIFT

(11) **EP 2 702 383 B1**
(45) Veröffentlichungstag und Bekanntmachung des Hinweises auf die Patenterteilung: **29.07.2020**
(21) Anmeldenummer: 12717323.5
(22) Anmeldetag: 29.04.2012
(51) Int. Cl.: B26F 1/02, B26F 1/14, G01N 1/28, G01N 35/00

(54) **STANZVORRICHTUNG MIT MODULAREM STANZMITTEL**
PUNCHING DEVICE WITH MODULAR PUNCHING MEANS
DISPOSITIF DE POINÇONNAGE COMPRENANT UN MOYEN DE POINÇONNAGE MODULAIRE

(30) Priorität: 29.04.2011 DE 102011075035
(43) Veröffentlichungstag der Anmeldung: 05.03.2014
(73) Patentinhaber: Hamilton Bonaduz AG, 7402 Bonaduz (CH)
(72) Erfinder: GIOVANOLI, Nando, CH-7457 Bivio (CH); MENZI, Reto, CH-8757 Filzbach (CH)
(74) Vertreter: Müller Hoffmann & Partner
(86) Internationale Anmeldenummer: PCT/EP2012/057871
(87) Internationale Veröffentlichungsnummer: WO 2012/146769

(56) Entgegenhaltungen:
- EP-A2- 0 287 986
- EP-A2- 0 349 887
- WO-A1-2006/056658
- WO-A1-2008/013331
- WO-A1-2009/035182
- WO-A1-2009/105810
- GB-A- 1 505 556
- GB-A- 2 414 700
- US-A- 4 821 614
- US-A- 5 641 682
- US-A1- 2009 139 353
- Perkin Elmer: "Punch intelligently with the Wallac DBS Puncher", , 28 February 2005 (2005-02-28), pages 1-3, XP055445855, Retrieved from the Internet: URL:https://www.yumpu.com/en/document/view /42286989/punch-intelligently-with-the-wal lac-dbs-puncher-perkinelmer [retrieved on 2018-01-30]

## Beschreibung

Die vorliegende Erfindung betrifft eine Stanzvorrichtung zum Verarbeiten von getrockneten auf einer Probenkarte aufgetragenen Proben, insbesondere von DNA enthaltenden Flüssigkeiten wie Blut, Speichel und dergleichen.

Bei derartigen Stanzvorrichtungen werden in einem Magazin für Probenkarten mehrere Probenkarten aufbewahrt und in einer bestimmten Reihenfolge mittels einer Greifeinheit aus dem Magazin entnommen und einem Stanzmittel der Stanzvorrichtung zugeführt. In einem zuvor mittels bildgebender Verfahren erfassten Bereich, in dem auf der Probenkarte die aufgetragene Probe ermittelt worden ist, erfolgt dann das Ausstanzen von wenigstens einem Probenstück aus der Probenkarte. Es können aus dem gleichen Probenbereich auch mehrere Probenstücke gleichzeitig oder nacheinander ausgestanzt werden. Die ausgestanzten Probenstücke werden durch Bewegung eines Stanzstifts (Stempel) durch eine Austrittsöffnung in einem Unterwerkzeug hindurch geführt und auf diese Weise in eine Aufnahmevertiefung in einem Aufnahmebehälter, vorzugsweise in einen Napf einer Mikrotiterplatte, transportiert. Sobald aus allen gewünschten Probekarten Probenstücke ausgestanzt und im Aufnahmebehälter aufgenommen worden sind, kann die Analyse der einzelnen in den Probenstücken enthaltenen Proben mittels Verfahren wie etwa PCR für DNA-Analysen, Hochdruck-Gaschromatografie (HPLC) oder ähnliches erfolgen, wobei hierzu nach dem Ausstanzen weitere Schritte durchgeführt werden, die im Rahmen der vorliegenden Anmeldung nicht detailliert beschrieben werden.

Ein Verfahren und eine Vorrichtung zum automatisierten Ausstanzen von Probenstücken aus Probenkarten ist beispielsweise aus der US 5,641,682 bekannt.
Zusätzlich wird auf die EP 0 349 887 A2, WO 2009/105810 A1 und den Wallac DBS Puncher von PerkinElmer hingewiesen.

Ferner ist unter der Bezeichnung "BSD1000-GenePunch" eine Stanzvorrichtung der genannten Art der Firma BSD Robotics (a Luminex Company, in Brisbane, Queensland 4110, Australia) bekannt. Ein zugehöriger Produktflyer war zum Anmeldezeitpunkt der vorliegenden Anmeldung unter der folgenden Internetadresse verfügbar:
http://www.bsdrobotics.com/Documents/Brochure/BSDR1000(10)%20-%20BSD1000%20GenePunch.PDF.

Ferner ist die Funktionsweise dieser Stanzvorrichtung in einem Videofilm offenbart, der zum Anmeldezeitpunkt unter der folgenden Internetadresse verfügbar war:
http://www.bsdrobotics.com/Videos/BSD 1000.wmv.

Aus dem Videofilm ist folgende Funktionsweise ersichtlich: Bei der Stanzvorrichtung "BS-D100d-GenePunch" wird eine Greifvorrichtung für Probenkarten von einem Magazin, aus dem die Greifvorrichtung eine Probenkarte entnommen hat, entlang einer horizontal verlaufenden Schiene zu einem Scanner bewegt, in den die Probenkarte eingeführt und anschließend gescannt wird. Die Greifvorrichtung ist dabei in zwei zueinander orthogonalen Richtungen beweglich, nämlich entlang der Schiene und orthogonal zu dieser, derart, dass die ergriffene Probenkarte in ihrer Kartenebene zweidimensional verschiebbar ist. Nach dem Scannen wird die Probenkarte mittels der Greifvorrichtung zum Stanzmittel der Stanzvorrichtung transportiert und relativ zu diesem positioniert, damit ein Probenstück an der nach dem Scannen ausgewerteten Position der Probenkarte ausgestanzt werden kann. Das ausgestanzte Probenstück wird anschließend in einen unter dem Stanzmittel angeordneten Aufnahmenbehälter, wie etwa einen Napf einer Mikrotiterplatte, abgegeben. Bei dieser Stanzvorrichtung sind mehrere Aufnahmebehälter sternförmig um eine zu einer horizontalen Ebene orthogonalen Drehachse angeordnet und ihre Position, insbesondere eines bestimmten Napfs, relativ zum Stanzmittel erfolgt mittels einer Drehbewegung und mittels Verschiebung in der Horizontalebene. Nachdem das Ausstanzen von einem oder mehreren Probenstücken aus einer Probenkarte abgeschlossen ist, transportiert die Greifvorrichtung die gestanzte Probenkarte entlang der Schiene zurück zum Kartenmagazin und legt diese dort wieder ab. Die Greifvorrichtung wird dann kurz zurückgezogen, bis das Kartenmagazin um eine Position nach oben verfahren worden ist, um die nächste Probenkarte aus dem Magazin entnehmen zu können.

Eine aus dem Stand der Technik bekannte Stanzvorrichtung umfasst also in allgemeinen Worten wenigstens ein Stanzmittel mit einem Stempel und einem Unterwerkzeug, wobei der Stempel zwischen einer vom Unterwerkzeug entfernten Ruhestellung und einer dem Unterwerkzeug angenäherten Stanzstellung beweglich ist, und wobei das Stanzmittel eine Aufnahmeöffnung aufweist, in welche eine Proben karte mittels einer beweglichen Greifeinheit der Stanzvorrichtung einführbar und relativ zum Stanzmittel positionierbar ist. Ferner weist sie einen mit dem Stempel des Stanzmittels koppelbaren oder gekoppelten Stanzantrieb auf, durch den die Bewegung des Stempels zwischen Ruhestellung und Stanzstellung angetrieben wird.

Bei den bekannten Stanzvorrichtungen hat sich gezeigt, dass verschlissene oder aufgrund der Staubentwicklung beim Stanzvorgang zu reinigende Stanzwerkzeuge in aufwändiger Weise ausgebaut werden müssen. Dabei sind insbesondere viele Handgriffe erforderlich um die Stanzwerkzeuge (also insbesondere das Stanzmittel mit Stempel und Unterwerkzeug) von einem zugehörigen Antrieb zu entkoppeln. Ferner ist es bei derartigen Stanzvorrichtungen auch schwierig, das Stanzwerkzeug in einfacher Weise auszutauschen, wenn beispielsweise Probenstücke einer anderen Größe (anderer Durchmesser) ausgestanzt werden sollen.

Aufgabe der vorliegenden Erfindung ist es daher, die Handhabung des Stanzwerkzeugs, insbesondere des Stanzmittels einer Stanzvorrichtung zu vereinfachen.

Diese Aufgabe wird gelöst durch den Gegenstand des unabhängigen Anspruchs 1.

Zur Lösung dieser Aufgabe wird vorgeschlagen, dass das Stanzmittel eine von der Stanzvorrichtung gesonderte Struktur umfasst, an welcher der Stempel und das Unterwerkzeug angeordnet sind, wobei das Stanzmittel mit seiner Struktur derart ausgeführt ist, dass es ein mit der Stanzvorrichtung und dem Stanzantrieb koppelbares, austauschbares Modul bildet.

Eine gemeinsame Struktur, die auch als Konstruktion oder Aufbau bezeichnet werden kann, für den Stempel und das Unterwerkzeug ermöglicht durch einfaches Entfernen bzw. Einsetzen dieser Struktur von bzw. an der Konstruktion der restlichen Stanzvorrichtung eine optimale Austauschbarkeit des Stanzmittels. Hierdurch ist es möglich, das Stanzmittel bei festgestelltem Verschleiss oder bei einem bestimmten Grad an Verschmutzung durch Staub oder nach einer bestimmten Anzahl von Stanzvorgängen mit wenigen Handgriffen als komplettes Modul auszubauen. Es kann umgehend ein neues Stanzmittelmodul eingesetzt werden, so dass der Betrieb der Stanzvorrichtung nur für sehr kurze Zeit unterbrochen werden muss. Ein ausgebautes Stanzmittelmodul kann dann beispielsweise gereinigt und für einen nächsten Einsatz gewartet werden. Denkbar ist bei einer derartigen Modulbauweise des Stanzmittels auch eine Einwegnutzung, bei welcher das Stanzmittel nach einer bestimmten Betriebsdauer ausgetauscht und anschließend vorzugsweise rezykliert wird, beispielsweise beim Hersteller. Werden mit der Stanzvorrichtung unterschiedliche Probenkarten verarbeitet, so können in einfacher Weise Stanzmittelmodule mit anderer Stempelgröße (insbesondere Stempeldurchmesser) oder mit anderer Anzahl von Stempeln (natürlich mit zugehörigen anderen Unterwerkzeugen) je nach zu verarbeitender Probenkarte bzw. je nach Verfahren zur Analyse von ausgestanzten Probenstücken eingesetzt und ausgetauscht werden. Die Stanzvorrichtung kann daher sehr flexibel eingesetzt und für entsprechende Bedürfnisse einer Probenanalyse effizient angepasst werden, ohne dass der Betrieb der Stanzvorrichtung lange unterbrochen werden muss wegen des Austauschs des Stanzmittels.

Das Unterwerkzeug weist vorzugsweise eine Durchgangsöffnung auf, durch welche der Stempel in seiner Stanzstellung hindurchtritt, derart, dass ein aus der Proben karte ausgestanztes Probenstück an einer Austrittsöffnung in einen unterhalb des Stanzmittels angeordneten Aufnahmebehälter abgegeben werden kann.

Bevorzugt ist der Aufnahmebehälter relativ zum Stanzmittel beweglich, derart, dass eine einzelne von mehreren im Aufnahmebehälter vorgesehenen Aufnahmevertiefungen unterhalb der Durchgangsöffnung angeordnet werden kann.

Auf diese Weise können ausgestanzte Probenstücke in bestimmte bzw. gewünschte Aufnahmevertiefungen aufgenommen werden, so dass eine eindeutige Zuweisung eines ausgestanzten Probenstücks zu einer Aufnahmevertiefung im Aufnahmebehälter möglich ist. Als Aufnahmebehälter wird insbesondere an Mikrotiterplatten gedacht, deren einzelne Näpfe bzw. Wells die Aufnahmevertiefungen bilden.

Die Stanzvorrichtung umfasst eine Absaugvorrichtung, mittels welcher beim Stanzen entstehende Staubpartikel im Bereich des Unterwerkzeugs entfernbar sind. Eine derartige Absaugvorrichtung wirkt dem Verstauben des Stanzmittels und der gesamten Stanzvorrichtung entgegen. Ferner kann dem Eintrag von Staubpartikeln in die Aufnahmevertiefungen eines Aufnahmebehälters entgegengewirkt werden.

Die Stanzvorrichtung kann ferner eine Zuführeinrichtung für de-ionisierte Luft umfassen, mittels welcher de-ionisierte Luft in den Bereich des Unterwerkzeugs insbesondere im Bereich der Austrittsöffnung zuführbar ist. Da die ausgestanzten Probenkartenstücke sehr klein sind, insbesondere einen Durchmesser von wenigen Millimetern aufweisen und in der Regel aus einem grobstrukturierten faserigen Material, wie etwa Filterpapier oder dergleichen bestehen, haben diese Probenstücke die Tendenz aufgrund elektrostatischer Aufladung am Stempel anzuhaften, so dass sie nicht in eine gewünschte Aufnahmevertiefung abgegeben werden können. Durch die zugeführte de-ionisierte Luft, kann nun im Bereich zwischen Austrittsöffnung des Unterwerkzeugs und einem darunter liegenden Aufnahmebehälter bzw. einer bestimmten Aufnahmevertiefung eine leichte Luftströmung erzeugt werden, welche das Ablösen des Probenstücks vom Stempel und das Hineinfallen in eine betreffende Aufnahmevertiefung unterstützt.

Hierzu wird ferner vorgeschlagen, dass in der Struktur des Stanzmittels Absaug kanäle und Luftzufuhrkanäle voneinander getrennt ausgebildet sind mit jeweiligen Anschlussstellen, welche im gekoppelten Zustand des Stanzmittels an der Stanzvorrichtung in Verbindung mit entsprechenden Absaugleitungen und Luftzuführleitungen der Stanzvorrichtung stehen. Durch eine derartige Konstruktion des Stanzmittels kann dessen Austauschbarkeit trotz der vorhandenen Kanäle für Luftzuführung bzw. Saubabsaugung gewährleistet werden. Dabei können die entsprechenden Anschlüsse zwischen Stanzmittel und Stanzvorrichtung auch weitere Funktionen übernehmen, wie etwa eine Art Zwangszentrierung oder eine Art Ausrichtung des Stanzmittels relativ zur Stanzvorrichtung beim Anschließen des Stanzmittels an der Stanzvorrichtung.

Das Stanzmittel und dessen Struktur sind vorzugsweise derart ausgebildet, dass sie mittels einer im wesentlichen horizontal verlaufenden Verschiebung des Stanz mittels relativ zur Stanzvorrichtung mit der Stanzvorrichtung, insbesondere mit dem Stanzantrieb koppelbar sind. Dabei wird die horizontale Verschiebung als eine Bewegung verstanden die in etwa parallel zu einem Untergrund verläuft, auf dem die Stanzvorrichtung aufgestellt ist.

Die Stanzvorrichtung ist dabei bevorzugt so ausgeführt, dass mittels der horizontalen Verschiebung ferner die Absaugkanäle bzw. Luftzuführkanäle des Stanzmittels mit den entsprechenden Absaugleitungen bzw. Luftzuführleitungen der Stanzvorrichtung koppelbar sind.

Das Stanzmittel kann ferner wenigstens ein Strukturkopplungsmittel umfassen, das mit einem entsprechenden Gegenstück an der Stanzvorrichtung in Eingriff bringbar ist, und vorzugsweise kann es ferner ein am Stempel vorgesehenes Antriebskopplungmittel umfassen, das mit einem entsprechenden Gegenstück des Stanzantriebs in Eingriff bringbar ist.

Das Strukturkopplungsmittel ist dabei bevorzugt derart ausgeführt, dass es mit dem entsprechenden Gegenstück an der Stanzvorrichtung eine lösbare Arretierung des Stanzmittels an der Stanzvorrichtung ermöglicht. Dabei ist es weiter bevorzugt, wenn der arretierende Eingriff zwischen Stanzmittel und Stanzvorrichtung durch die erwähnte Verschiebung in im Wesentlichen horizontaler Richtung selbsttätig erfolgt.

Es wird vorgeschlagen, dass die Struktur des Stanzmittels eine Basis umfasst, die im gekoppelten Zustand der Stanzvorrichtung zugewandt ist, sowie einen mit der Basis verbundenen, den Stempel enthaltenden oberen Abschnitt und einen mit der Basis verbundenen, das Unterwerkzeug enthaltenden unteren Abschnitt aufweist, wobei die Aufnahmeöffnung zwischen dem oberen und dem unteren Abschnitt ausgebildet ist und der obere und untere Abschnitt von der Basis abstehen. Der obere und der untere Abschnitte können auch als Schenkel einer U-Form angesehen werden, wobei der Zwischenraum zwischen den Schenkein als Aufnahmeöffnung dient und der gekrümmte, die Schenkel verbindende Teil der U-Form der Basis entspricht.

Dabei sind bevorzugt die Absaugkanäle und die Luftzuführkanäle im unteren Abschnitt oder/und in der Basis ausgebildet, wobei vorzugsweise im unteren Abschnitt die Absaugkanäle oberhalb der Luftzufuhrkanäle angeordnet sind.

Vorzugsweise ist das Unterwerkzeug in einer Hülse aufgenommen ist, die am unteren Abschnitt befestigt ist, wobei die Hülse mit ihrer Oberseite eine Begrenzung des Absaugkanals bildet und mit ihrer Unterseite eine Begrenzung des Luftzuführkanals für de-ionisierte Luft bildet. Der durch die Hülse wenigstens teilweise gebildete Absaugkanal steht nach oben hin, also in Richtung des Stempels mittels um das Unterwerkzeug verteilt angeordneter Ansaugöffnungen mit der Umgebung in Kontakt, so dass an der Oberseite des unteren Abschnitts anfallende Staubpartikel im Bereich des Unterwerkzeugs abgesaugt werden können. Der Luftzuführkanal weist vorzugsweise nach unten gerichtete, ebenfalls um das Unterwerkzeug, insbesondere dessen Austrittsöffnung verteilt angeordnete Ausblasöffnungen auf, aus denen die de-ionisierte Luft nach unten hin, also auf der Unterseite des unteren Abschnitts ausströmt.

Gemäß einem weiteren unabhängigen Aspekt betrifft die Erfindung ein austauschbares Stanzmittelmodul für eine Stanzvorrichtung zum Verarbeiten von getrockneten auf einer Probenkarte aufgetragenen Flüssigkeitsproben, insbesondere körpereigenen Flüssigkeiten wie Blut, Speichel und dergleichen, wobei das Stanzmittelmodul eine Struktur aufweist, an welcher ein beweglicher Stempel und ein Unterwerkzeug angeordnet sind, wobei das Stanzmittelmodul derart ausgeführt ist, dass es mit der einen Stanzantrieb aufweisenden Stanzvorrichtung koppelbar ist, wobei das Stanzmittelmodul wenigstens ein Strukturkopplungsmittel umfasst, das mit einem entsprechenden Gegenstück an der Stanzvorrichtung in Eingriff bringbar ist, und wobei es ferner ein am Stempel vorgesehenes Antriebskopplungmittel umfasst, das mit einem entsprechen Gegenstück des Stanzantriebs in Eingriff bringbar ist.

Bevorzugt kann das Stanzmittelmodul wenigstens ein weiteres der oben beschriebenen, das Stanzmittel betreffenden Merkmale umfassen.

Es wird ferner vorgeschlagen, dass die Struktur des Stanzmittelmoduls von einem Modulgehäuse umgeben ist, wobei das Strukturkopplungsmittel und das Antriebskopplungsmittel über die Außenseite des des Gehäuses vorstehen, um mit einem entsprechenden Gegenstück an der Stanzvorrichtung in Eingriff zu kommen.

Gemäß einem weiteren Aspekt betrifft die Erfindung eine Dosiervorrichtung, insbesondere Pipettierautomaten mit einer Stanzvorrichtung mit wenigstens einem der oben genannten Merkmale.

Bevorzugt kann bei der Dosiervorrichtung an einem die Greifeinheit der Stanzvorrichtung aufweisenden, beweglichen Träger auch eine Pipettiervorrichtung mit wenigstens einem Pipettierkanal angebracht sein.

Alternativ hierzu kann die Dosiervorrichtung wenigstens zwei voneinander getrennte, bewegliche Träger aufweisen, wobei an dem einen Träger die Greifeinheit der Stanzvorrichtung angeordnet ist und wobei an dem anderen Träger eine Pipettiervorrichtung mit wenigstens einem Pipettierkanal angeordnet ist.

Die Kombination einer Dosiervorrichtung mit einer Stanzvorrichtung ermöglicht eine verbesserte automatisierte Verarbeitung von auf Probenkarten aufgenommenen Proben. In einem entsprechenden Verfahren zur Verarbeitung von Probenkarten ist es besonders bevorzugt und vorteilhaft, dass die Aufnahmebehälter, insbesondere deren Aufnahmevertiefungen mittels der Dosiervorrichtung mit Flüssigkeit gefüllt werden bevor Probenstücke aus den Probenkarten in die Aufnahmevertiefungen ausgestanzt werden. Bei mit Flüssigkeit befüllten Aufnahmebehältern bzw. -vertiefungen ist die Gefahr des Anhaftens von Probenstücken an den Wänden der Aufnahmevertiefungen aufgrund elektrostatischer Aufladung stark verringert und die ausgestanzten Probenstücke kommen in der Regel unmittelbar nach dem Ausstanzen in Kontakt mit Flüssigkeit, saugen sich mit dieser voll und sinken in ihrer jeweiligen Aufnahmevertiefung in Richtung von deren tiefstem Punkt. Innerhalb eines eine Gesamtvorrichtung aus wenigstens einer Stanzvorrichtung und einer Dosiervorrichtung umgebenden Gehäuses können auch weitere für die Durchführung eines Analyseverfahrens erforderliche Gerätschaften untergebracht sein, wie etwa eine Vorrichtung zum Verschließen der Aufnahmebehälter, eine Zentrifuge oder dergleichen. In Kombination mit einer Dosiervorrichtung ist auch möglich, dass nach dem Ausstanzen von Probenstücken im Hinblick auf das durchzuführende Analyseverfahren eine (weitere) Flüssigkeit in die Aufnahmevertiefungen dispensiert werden kann.

Die Erfindung wird nachfolgend beispielhaft und nicht einschränkend unter Bezugnahme auf die anliegenden Figuren beschrieben.
- Fig. 1: zeigt in einer schematischen Perspektivdarstellung eine Stanzvorrichtung in Kombination mit einer Dosiervorrichtung.
- Fig. 2: zeigt in schematischer Perspektivdarstellung die Stanzvorrichtung ohne Dosiervorrichtung und ohne Greifeinheit
- Fig. 3: zeigt in den Teilfiguren a) und b) schematisch dargestellte Probenkarten im Zustand vor dem Ausstanzen von Probenstücken (Fig. 3a) und nach dem Ausstanzen (Fig. 3b).
- Fig. 4: zeigt in einer schematischen Perspektivdarstellung ein modulares Stanzmittel der Stanzvorrichtung von schräg hinten.
- Fig. 5: zeigt eine schematische Schnittdarstellung des Stanzmittels entlang der Schnittlinie V-V der Fig. 4 mit einem der Kopplung dienenden Gegenstück der Stanzvorrichtung.
- Fig. 6: zeigt in schematischer, perspektivischer Explosionsdarstellung einen unteren Abschnitt des Stanzmittels.
- Fig. 7: zeigt in den Teilfiguren a) und b) die Ausgestaltung von Kanälen im unteren Abschnitte des Stanzmittels zum Absaugen von Staub (Fig. 7a) und zum Zuführen von de-ionisierter Luft (Fig. 7b).
- Fig. 8: zeigt eine Schnittdarstellung des Stanzmittels entlang einer Schnittlinie VIII-VIII der Fig. 4.
- Fig. 9: zeigt eine schematische Perspektivdarstellung eines mit dem Stanzmittel koppelbaren Stanzantriebs.

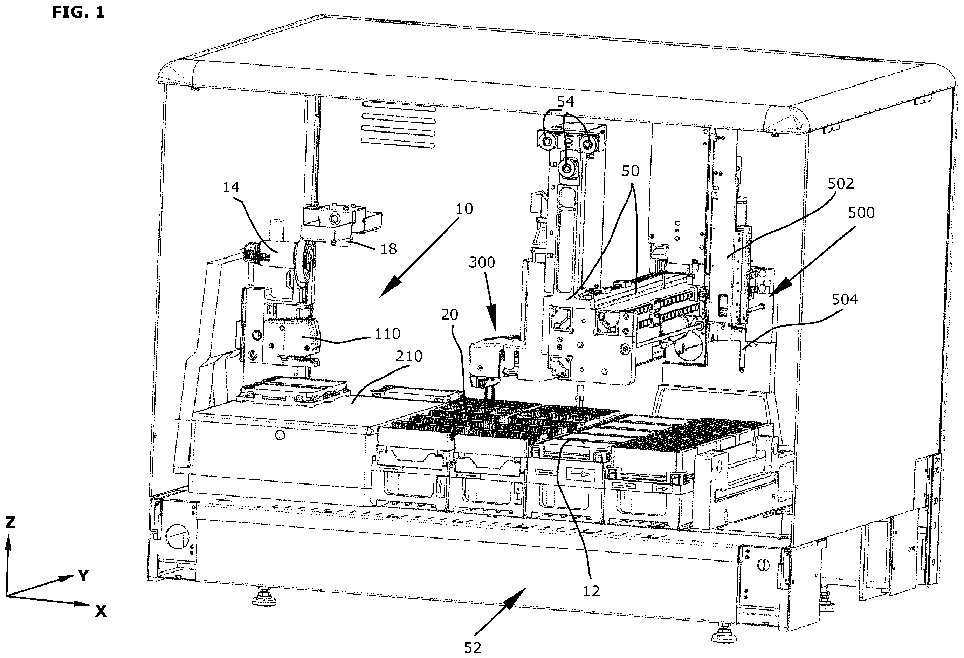

Fig. 1 zeigt eine Gesamtansicht einer Stanzvorrichtung 10, die hier in einer optionalen Weise mit einer Dosiervorrichtung 500 kombiniert ist. In der hier dargestellten Kombination nutzen die Stanzvorrichtung 10 und die Dosiervorrichtung 500 einen gemeinsamen Träger 50, der in einer der Hauptrichtungen X, Y, Z, nämlich in Längsrichtung X beweglich ist. Hierzu ist der Träger 50 im oberen Bereich einer für die Gesamtvorrichtung bereitgestellten, hier aber nur teilweise dargestellten Tragkonstruktion 52 mittels Rollen 54 an nicht dargestellten Längsschienen gelagert. Selbstverständlich ist auch eine nicht dargestellte Antriebsvorrichtung für den Träger 50 vorhanden, die über eine ebenfalls nicht dargestellte Steuereinheit der Gesamtvorrichtung ansteuerbar ist.

Die Dosiervorrichtung umfasst eine am Träger 50 in die beiden anderen Hauptrichtungen Y, Z, also die Querrichtung Y und Höhenrichtung Z, beweglich angebrachte Pipettiervorrichtung 502 mit wenigstens einem Pipettierkanal 504 zum Aspirieren und Dispensieren von Flüssigkeit in/aus bereitgestellten Aufnahmebehältern 12 bzw. einem Reservoir für die zu dosierende Flüssigkeit. Die Dosiervorrichtung 500 ist wie ein ansich bekannter Pipettierautomat ausgeführt und und soll hier nicht weiter im Detail beschrieben werden.

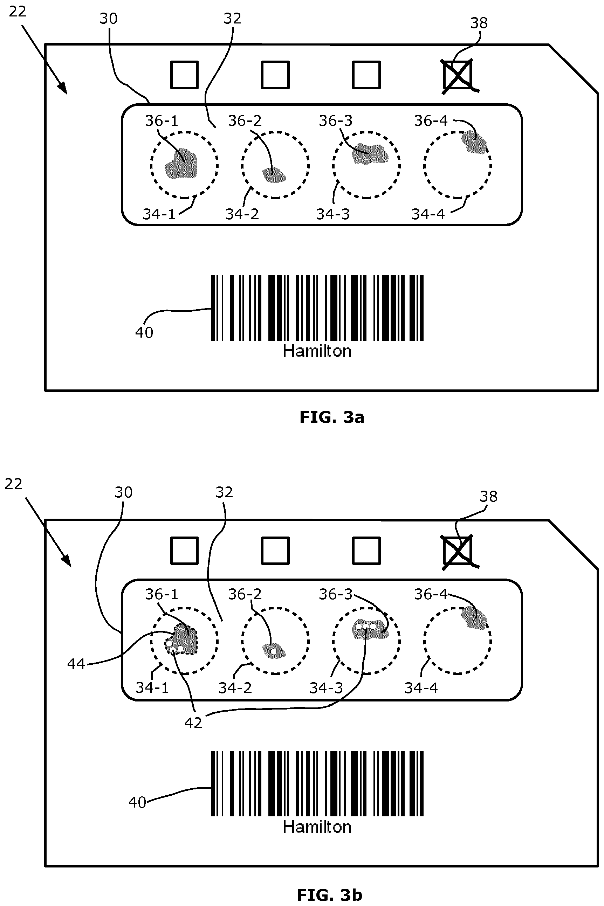

Auf der der Pipettiervorrichtung 502 gegenüberliegenden Seite des Trägers 50 ist eine Greifeinheit 300 angebracht, die ebenfalls beweglich in den beiden anderen Hauptrichtungen Y, Z ausgeführt ist. Diese Greifeinheit 300 ist im Rahmen dieser Anmeldung als zur Stanzvorrichtung 10 zugehörig anzusehen, auch wenn sie im vorliegenden Beispiel an einem gemeinsam mit der Pipettiervorrichtung 502 genutzten Träger 50 angebracht ist. Ferner umfasst die Stanzvorrichtung 10 als weitere Hauptkomponenten einen Stanzantrieb 14, ein Stanzmittel 110, eine Bildaufnahmevorrichtung 18 und eine Aufnahmeplatte 210. Ferner sind aus der Fig. 1 Magazine 20 für jeweils mehrere Probenkarten 22 (Fig. 3) ersichtlich. Mittels der Greifeinheit 300 wird eine Probenkarte aus einem Magazin 20 entnommen und dem Stanzmittel 110 zugeführt, so dass mittels des Stanzmittels 110 wenigstens ein Probenstück aus der betreffenden Probenkarte ausgestanzt werden kann.

Die Funktion der Greifeinheit 300 wird im Rahmen dieser Anmeldung nur teilweise beschrieben werden. Für Details zur Ausgestaltung der Greifeinheit und ihrem Zusammenwirken mit der Stanzvorrichtung bzw. dem Stanzmittel der vorliegenden Anmeldung wird auf die von der Anmelderin zeitgleich eingereichte Anmeldung mit dem Titel "Stanzvorrichtung mit Greifeinheit" (Offenlegungsschrift DE102011075036 A1) verwiesen, deren Inhalt zur Ausgestaltung der Greifeinheit durch Bezugnahme hier aufgenommen wird.

Ebenso wird im Rahmen dieser Anmeldung auf spezielle Merkmale der Aufnahmeplatte 210 nur teilweise eingegangen. Für Details zur Ausgestaltung dieser Aufnahmeplatte bzw. von einem durch die Aufnahmeplatte 210 abgedeckten, in Fig. 1 nicht sichtbaren Antrieb zur Positionierung von Aufnahmebehältern relativ zum Stanzmittel 110 wird auf die beiden zeitgleich eingereichten Anmeldungen mit dem Titel "Stanzvorrichtung mit Aufnahmeplatte" (Offenlegungsschrift DE102011075037 A1) und "Stanzvorrichtung mit beleuchteter Aufnahmeplatte" (Offenlegungsschrift DE102011075039 A1) verwiesen, deren beider Inhalt zur Ausgestaltung der Aufnahmeplatte und des von ihr abgedeckten Antriebs durch Bezugnahme hier aufgenommen wird.

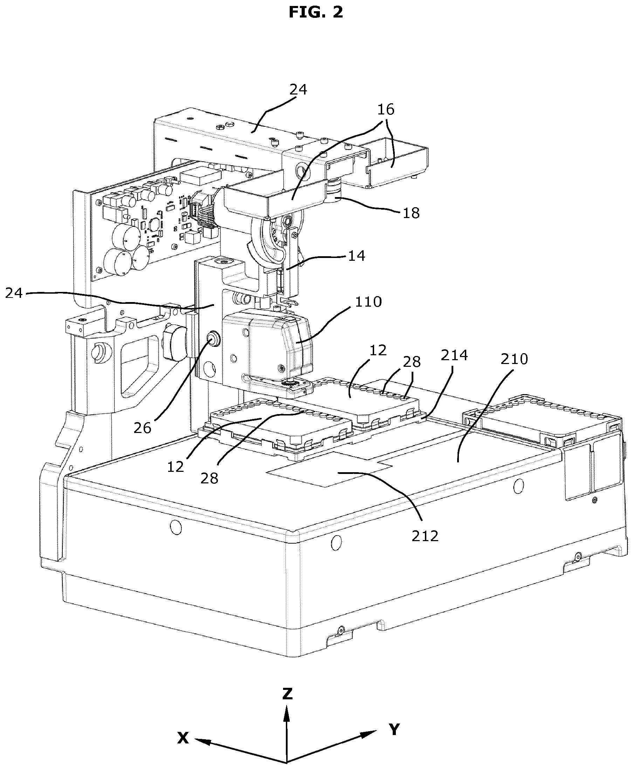

Fig. 2 zeigt in schematischer Perspektivdarstellung die Stanzvorrichtung 10 ohne Greifeinheit 300. Die Stanzvorrichtung 10 umfasst eine rahmenartige Struktur bzw. Tragkonstruktion 24, an welcher der Stanzantrieb 14 und die Bildaufnahmevorrichtung 18 befestigt sind und an welcher das Stanzmittel 110 abnehmbar als Stanzmittelmodul angebracht ist. In Fig. 2 ist der Zustand gezeigt, in dem das modulare Stanzmittel 110 mit der Struktur 24 der Stanzvorrichtung gekoppelt ist. Um das Stanzmittel 110 von der Struktur 24 abnehmen zu können, wird vorgeschlagen, dass ein Betätigungselement bzw. Druckknopf 26 betätigt wird, so dass ein zwischen Stanzmittel 110 und Tragkonstruktion 24 vorhandener Eingriff gelöst werden kann. Die Aufnahmeplatte 210 dient der Lagerung bzw. Abstützung von wenigstens einem Aufnahmebehälter 12, der vorzugsweise als Mikrotiterplatte mit einer bestimmten Anzahl Näpfen (Aufnahmevertiefungen) 28 versehen ist. Es können unterschiedliche Mikrotiterplatten zum Einsatz kommen und die Anzahl von Näpfen 28 ist ansich nicht beschränkt, außer im Hinblick darauf, dass ein aus einer Probenkarte ausgestanztes Probenstück in einem entsprechenden Napf 28 Platz hat.

Aus der Übersichtsdarstellung der Fig. 2 ist auch ersichtlich, dass die Bildaufnahmevorrichtung 18 im Wesentlichen vertikal oberhalb eines beleuchteten Bereichs 212 der Aufnahmeplatte 210 angeordnet ist. Dieser beleuchtete Bereich 212 wird bevorzugt durch eine in der Aufnahmeplatte aufgenommene bzw. auf deren Rückseite angeordnete Elektrolumineszenzfolie gebildet. Eine darauf angeordnete Mikrotiterplatte 12 kann von der EL-Folie 212 hinterleuchtet werden, so dass mittels der Bildaufnahmevorrichtung 18 ein Bild der hinterleuchteten Mikrotiterplatte 12 bzw. eines Teils von ihr erfasst werden kann. Die Mikrotiterplatte(n) 12 ist/sind auf der Aufnahmeplatte 210 in einem Transportrahmen 214 aufgenommen, der über hier nicht dargestellte Magneten mit einer unter der Aufnahmeplatte 210 befindlichen Antriebseinheit gekoppelt ist und mittels dieser Antriebseinheit auf der Aufnahmeplatte 210 relativ zum feststehenden Stanzmittel 110 bewegt werden kann. Hierdurch kann eine bestimmte Aufnahmevertiefung 28 eines Aufnahmebehälters 12 genau unterhalb des Stanzmittels 110 angeordnet werden, so dass ein ausgestanztes Probenstück in diese Aufnahmevertiefung hinfällt bzw. in dieser aufgenommen wird. Beidseitig der Bildaufnahmevorrichtung 18 sind Halterungen 16 vorgesehen für alternative Beleuchtungsmittel, welche einen unter der Bildaufnahmeeinrichtung 18 positionierten Gegenstand, vorzugsweise eine Probenkarte, von oben beleuchten, so dass bildverarbeitende Prozesse für die Probenkarte durchgeführt werden können, beispielsweise Erkennung eines Barcodes und dergleichen.

Fig.3 zeigt in den Teilfiguren a) und b) ein Beispiel einer Probenkarte 22. Die Probenkarte weist eine Art Öffnung 30 auf, in welcher ein saugfähiges Material 32, wie etwa eine Art Filterpapier oder dergleichen sichtbar ist. Auf dem saugfähigen Material ist wenigstens ein Probenbereich ausgewiesen, im vorliegenden Beispiel sind es vier solche Probenbereiche 34-1 bis 34-4, die als gestrichelte Kreise dargestellt sind. Wenn Proben, wie etwa Blut, Speichel oder aber auch andere Flüssigkeiten mittels der Probenkarte 22 gesammelt werden, sollen die Flüssigkeitsproben nach Möglichkeit innerhalb der markierten Probenbereiche 34-1 bis 34-4 abgegeben werden. Im vorliegenden Beispiel sind unterschiedlich große Proben 36-1 bis 36-4, beispielsweise Bluttropfen oder Speichelproben, in die entsprechenden Probenbereiche 34-1bis 34-4 abgegeben worden. Die Probe 36-4 liegt dabei nicht vollständig innerhalb der Markierung von Probenbereich 34-4, so dass diese Probe von einem Probengeber bzw. von medizinischem Personal entsprechend mit einem Kreuz 38 oberhalb des Probenbereichs 34-4 als ungültig gekennzeichnet worden ist. Unterhalb des saugfähigen Materials 32 ist auf der Karte noch eine Kodierung (Barcode, 2D-Barcode oder dergleichen) 40 vorgesehen, um eine Identifikation der Probenkarte und eine Zuordnung zu einem Probengeber, einem erfassenden Institut oder dergleichen zu ermöglichen. Auf der Probenkarte 22 können noch weitere Informationen enthalten bzw. aufgedruckt sein, wie etwa Herstellerangaben, Angaben zum Zweck der Karte oder zur Probenflüssigkeit etc. Die in flüssiger Form aufgebrachten Proben 36-1 bis 36-4 werden vom saugfähigen Material 32 aufgenommen und trocknen anschließend. Nach dem Trocknen können aus den Proben 36-1 bis 36-4 Probenstücke ausgestanzt werden mittels des Stanzmittels 110. Die Probenkarte 22 nach dem Ausstanzen von mehreren Probenstücken aus den Proben 36-1 bis 36-3 ist in der Fig. 3b durch die weisen Stanzlöcher 42 angedeutet. Wo und in welcher Reihenfolge das Ausstanzen von Probenstücken erfolgt kann beispielsweise mittels Bildverarbeitung festgelegt werden, wobei zum einen erkannt werden kann, ob eine Probe innerhalb des markierten Probenbereichs 34-1 bis 34-4 liegt (z.B. unter Verwendung des Kreuzes 38), wo die Probe 36-1 bis 36-4 innerhalb des Probenbereichs 34-1 bis 34-4 liegt und welche Begrenzung sie aufweist, was bei der Probe 36-1 durch die gestrichelte Linie 44 angedeutet ist. Auf Grundlage solcher Informationen und der gewünschten Anzahl auszustanzender Probenstücke kann dann ermittelt werden, wo Probenstücke ausgestanzt werden sollen. Dementsprechend kann die Probenkarte 22 dann relativ zum Stanzmittel positioniert werden, so dass die Probenstücke an den vorbestimmten Stellen ausgestanzt werden können. Die hier dargestellte Form der Probenkarte ist rein beispielhaft, die Proben karte kann ein anderes Format aufweisen, mehr oder weniger, kleinere oder größere Probenbereiche 34 aufweisen etc.

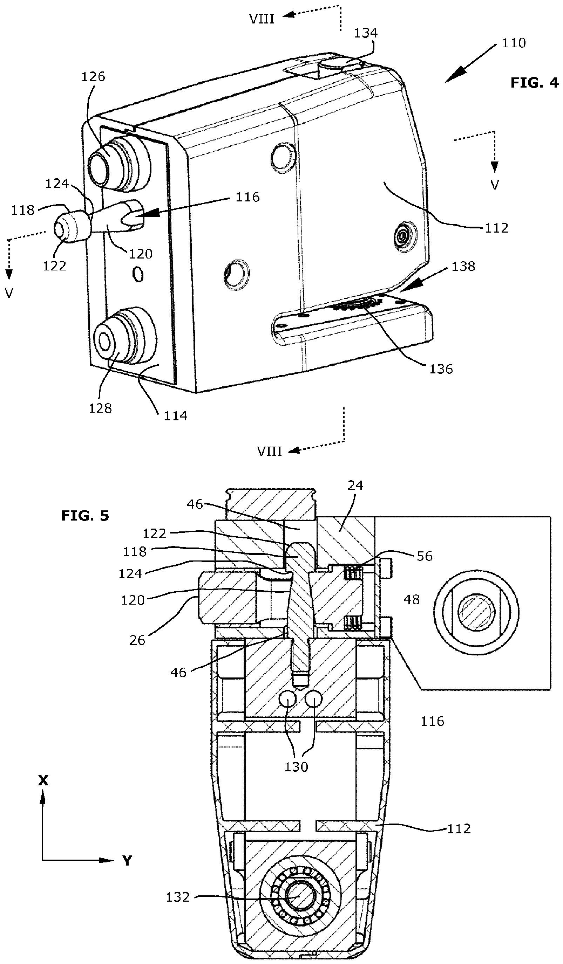

Fig. 4 zeigt eine Ausführungsform eines modular ausgeführten Stanzmittels 110 in seinem Stanzmittelgehäuse 112. An der im gekoppelten Zustand der Struktur 24 der Stanzvorrichtung 10 zugewandten Rückseite 114 weist das Stanzmittel 110, das auch als Stanzkopf bezeichnet werden kann, einen Kopplungsstift 116 (Strukturkopplungsmittel) auf mit einem Kopplungskopf 118 und einem im Durchmesser wenigstens teilweise sich verjüngend ausgebildeten Kopplungsschaft 120. Der Kopplungskopf 118 weist einen stumpfkegelartigen vorderen Abschnitt 122 auf, welcher das leichte Einführen des Kopplungsstifts 116 in eine entsprechende Kopplungsöffnung 46 an der Tragkonstruktion 24 der Stanzvorrichtung 10 ermöglicht, was aus der Schnittdarstellung der Fig. 5 (entsprechend der Schnittlinie V-V der Fig. 4) erkennbar ist. Am Übergang vom Kopplungskopf 118 zum Kopplungsschaft 120 ist ein Rücksprung 124 ausgebildet, welcher im gekoppelten Zustand an der Struktur 24 mit einem federvorgespannten Rastelement 48 in Eingriff steht, so dass das Stanzmittel 110 an der Tragkonstruktion 24 arretiert bzw. in einem verriegelten Zustand angebracht werden kann. Um diesen Eingriff zu lösen, kann mittels des bereits unter Bezugnahme auf die Fig. 2 erwähnten Druckknopfs 26 das Rastelement 48 entgegen der Kraft einer Feder 56 in Y-Richtung verschoben werden, so dass das Stanzmittelmodul 16 in X-Richtung von der Struktur 24 entfernt werden kann. Das Koppeln des Stanzmittels 16 an der Struktur 24 erfolgt ebenfalls im Wesentlichen in der horizontalen Richtung X, wobei die Formgebung von Kopplungskopf 118 und Rastelement 48 eine Verschiebung des Rastelements 48 entgegen der Vorspannkraft der Feder 56 ermöglicht bis das Rastelement 48 den Kopplungskopf 118 beim Rücksprung 124 hintergreifen kann und wenigstens abschnittsweise am Kopplungsschaft 120 anliegt (Fig. 5).

An der Rückseite 114 des Stanzmittelmoduls 110 (Fig. 4) können ferner ein Anschlussstück 126 für die Kopplung mit einer nicht dargestellten Absaugeinrichtung und eine weiteres Anschlussstück 128 für die Verbindung mit einer nicht dargestellten Einrichtung zum Zuführen von de-ionisierter Luft vorgesehen sein. Diese Anschlussstücke 126, 128 stehen im gekoppelten Zustand in fluiddichter Verbindung mit entsprechenden Gegenstücken und Leitungen an der der Struktur 24 der Stanzvorrichtung. In der Fig. 5 sind zwei mit dem Absauganschlussstück 126 in Verbindung stehende Leitungen bzw. Absaugkanäle 130 ersichtlich.

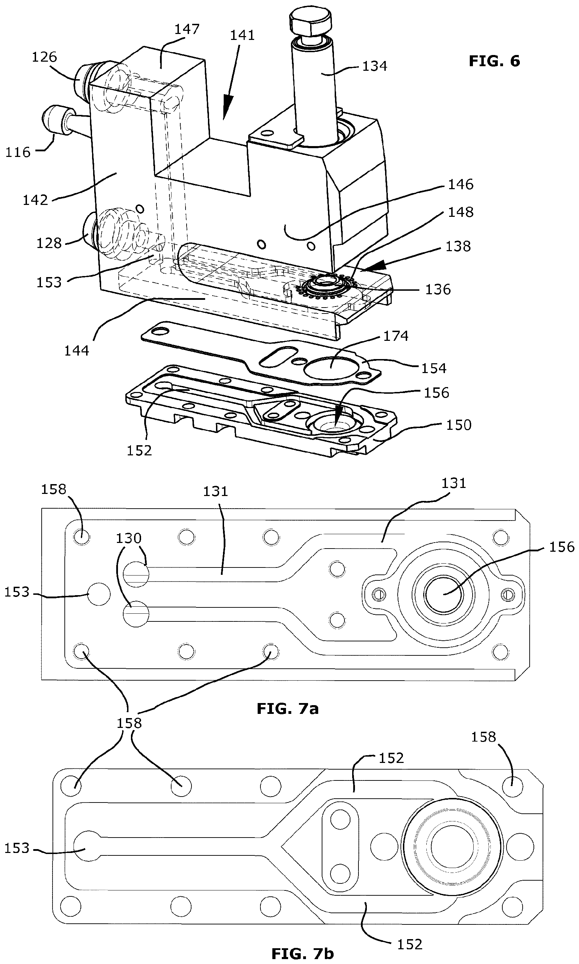

In der Fig. 6 ist das Stanzmittel 110 ohne Gehäuse dargestellt und es ist ersichtlich, dass es eine eigene Struktur bzw. Konstruktion 141 aufweist mit einer Basis 142, einem unteren Abschnitt 144 und einem oberen Abschnitt 146. Der untere Abschnitt 144 und der obere Abschnitt 146 sind mit der Basis 142 verbunden und weisen zwischen sich die Aufnahmeöffnung 138 auf. Die beiden Abschnitte 144, 146 bilden zusammen mit der Basis 142 eine Art U-Form, wobei der obere Abschnitt 146 bezogen auf einen oberen Rand 147 der Basis 142 etwas versetzt nach unten zum unteren Abschnitt 144 hin angeordnet ist.

An der Oberseite des Unteren Abschnitts 144 ist das Unterwerkzeug 136 ersichtlich. Um das Unterwerkzeug herum sind verteilt Absaugöffnungen 148 vorgesehen, welche mit im unteren Abschnitt 144 vorgesehenen Absaugkanälen 131 (Fig. 7b) und den in der Basis 142 vertikal verlaufenden Absaugkanälen 130 in Verbindung stehen. Durch die Absaugöffnungen 148 kann beim Stanzen entstehender Staub abgesaugt und in einen nicht dargestellten Sammelbehälter einer Absaugvorrichtung der Stanzvorrichtung 10 eingebracht werden. Der untere Abschnitt 144 umfasst ferner einen Einsatz 150, in welchem Kanäle 152 zum Zuführen von de-ionisierter Luft zur Unterseite des unteren Abschnitts 144 hin vorgesehen sind. Die Abdeckung der Kanäle 152 gegenüber den Absaugkanälen 131 erfolgt durch eine Trennplatte 154. Die Kanäle 152 sind über ein vertikal verlaufendes Kanalstück 153 mit dem entsprechenden Anschlusstück 128 verbunden. In dem Einsatz 150 des unteren Abschnitts 144 ist ferner eine Austrittsöffnung 156 ersichtlich, durch welche hindurch ein aus einer Probenkarte ausgestanztes Probenstück nach unten in richtung eines Aufnahmebehälters 12 (Fig. 2) gelangen kann. Der Einsatz 150 ist vorzugsweise mit dem Rest des unteren Abschnitts 144 an mehreren Stellen 158 verschraubt. Die Kanäle 130, 131 zum Absaugen bzw. die Kanäle 152, 153 zum Zuführen von de-ionisierter Luft sind vorzugsweise einstückig im unteren Abschnitt 144 bzw. dem zugehörigen Einsatz 150 ausgebildet, vorzugsweise handelt es sich dabei um gefräste/gebohrte Kanäle oder um Formteile, die durch (Spritz-)Gussverfahren hergestellt worden sind.

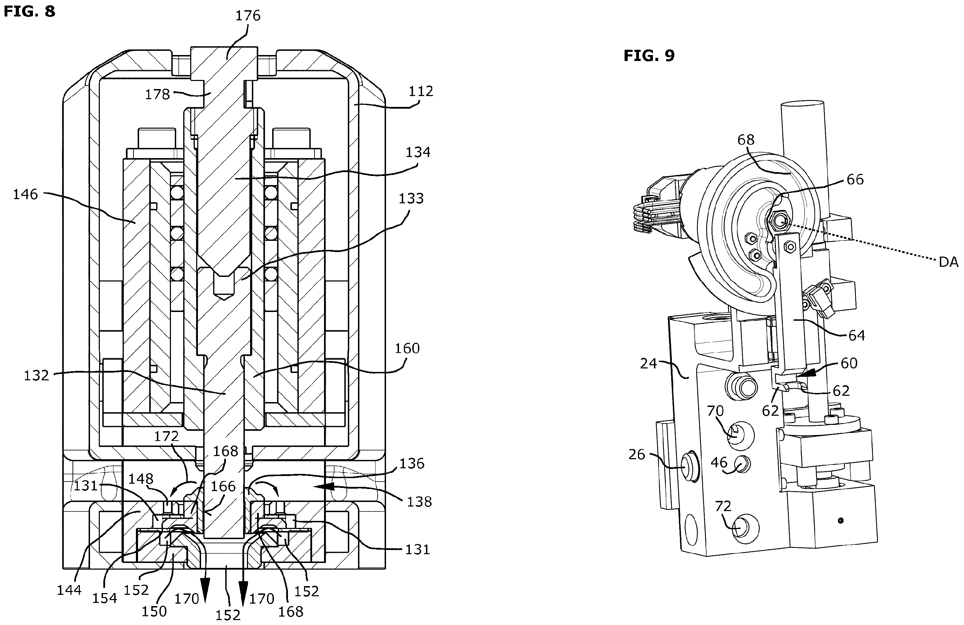

Fig 8 zeigt eine Schnittdarstellung des Stanzmittels 110 entsprechend der Schnittlinie VIII-VIII der Fig. 4. In dieser Darstellung sind folgende bereits erwähnte Bauteile ersichtlich: Gehäuse 112, unterer Abschnitte 144, oberer Abschnitt 146, Einsatz 150, Aufnahmeöffnung 138 und Unterwerkzeug 136. Das Stanzmittel 110 umfasst ferner einen Stempel 132, an den sich an seinem oberen Ende 133 ein vorzugsweise stiftartiges Antriebskopplungsmittel 134 anschließt. Der Stempel und das Antriebskopplungsmittel 134 sind in einer gemeinsamen Hülse 160 aufgenommen, die derart mit dem Stempel 132 und dem Antreibskopplungsmittel 134 verbunden ist, dass sie gemeinsam mit diesen beiden in deren Längsrichtung (Z-Richtung, wenn das Stanzmittel 110 an der Stanzvorrichtung 10 angebracht ist) hin und her verschiebbar ist. Die Hülse 160 ist von einem Kugellager bzw. Kugelkäfig 162 umgeben, welcher die Bewegung der Hülse 160 relativ zu einer feststehenden Hülse 164 ermöglicht, die fest mit dem oberen Abschnitt 146 der Struktur 141 des Stanzmittels 110 verbunden ist.

Das Unterwerkzeug 136 weist eine Durchgangsöffnung 166 für den Stempel 132 auf die in die Austrittsöffnung 156 mündet. Das Unterwerkzeug 136 ist in einer Hülse 168 aufgenommen, die derart ausgebildet ist, dass sie im Bereich des Unterwerkzeugs 136 die Absaugkanäle 131 und die Kanäle für de-ionisierte Luft 152 voneinander trennt und die jeweiligen Luftströmungen entsprechend leitet, was für die de-ionisierte Luft durch die Pfeile 170 und für das Absaugen durch die Absaugöffnungen 148 hindurch mittels der Pfeile 172 angedeutet ist. Im Bereich des Unterwerkzeugs wirken die Hülse 168 und die Trennplatte 154 in geeigneter Weise so zusammen, dass die beiden Strömungen zum Absaugen von Staub bzw. zum Zuführen von de-ionisierter Luft voneinander getrennt sind, wobei die Hülse 168 vorzugsweise auf der Trennplatte 154 aufliegt und eine in der Trennplatte 154 vorgesehene Öffnung 174 (Fig. 6) wenigstens teilweise abdeckt. Natürlich weist auch das Gehäuse 112 an denjenigen Stellen, an denen sich der Stempel 132 vom oberen Abschnitt in den unteren Abschnitt und in Richtung der Austrittsöffnung 156 bewegen kann entsprechende Öffnungen auf, die den Durchtritt des Stempels 132 ermöglichen.

Das Antriebskopplungsmittel 134 weist in seinem oberen Bereich Kopplungskopf 176 und einen im Durchmesser kleineren Kopplungshals 178 auf. Der Kopplungskopf 176 und der Kopplungshals 176 sind in ein entsprechend ausgebildetes antriebsseitiges Kopplungsgegenstück 60 (Fig. 9) einführbar. Das Kopplungsgegenstück 60 weist zwei gabelartige Zinken 62 auf, die vorzugsweise so voneinander im Abstand angeordnet sind, dass der Kopplungshals 178 zwischen ihnen aufgenommen werden kann und der Kopplungskopf 176 mit seiner Unterseite auf ihnen aufliegt. Durch diese formschlüssige Verbindung kann das Antriebskopplungsmittel 134 und somit der damit verbundene Stempel 132 mittels des Stanzantriebs 14 zwischen seiner Ruhestellung und seiner Stanzstellung bewegt werden. Das Kopplungsgegenstück 60 ist am unteren Ende einer Antriebsstange 64 vorgesehen, an deren oberen Ende eine Rolle 66 angebracht ist. Die Rolle 66 ist in einer spiralförmig verlaufenden Kulissenführung 68 aufgenommen. Wird diese Kulissenführung 68 mittels eines hier nicht dargestellten Motors, insbesondere Elektromotors, in Drehung versetzt, in Fig. 9 beispielsweise im Uhrzeigersinn, wird die Antriebsstange 64 aufgrund der sich von der Drehachse DA entfernenden Kulisse 68 linear nach unten bewegt, was zu einer Bewegung des Stempels 132 von seiner Ruhestellung in die in der Fig. 8 dargestellte Stanzstellung führt.

Aus der Fig. 9 ist ferner ersichtlich, dass der Stanzantrieb 14 an der Tragkonstruktion 24 der Stanzvorrichtung angebracht ist. Unterhalb des Stanzantriebs sind in der Struktur 24 Anschlussöffnungen 70 und 72 ersichtlich, in welche die Anschlussstücke 126 und 128 des Stanzmittelmoduls 110 eingeführt werden können. Ferner ist unterhalb der Anschlussöffnung 70 die bereits unter Bezugnahme auf die Fig. 5 erwähnte Kopplungsöffnung 46 ersichtlich, in welche der Kopplungsstift 116 eingeführt werden kann.

Das Stanzmittelmodul 110 weist eine eigene Struktur 141 auf, die von der Struktur 24 der Stanzvorrichtung gesondert ist und den Stempel 132 sowie das Unterwerkzeug 136 umfasst. Die beiden gesonderten Strukturen 24 und 141 können über einen am Stanzmittelmodul 110 vorgesehenen Kopplungsstift 116 und ein an der Struktur 24 der Stanzvorrichtung 10 bereitgestelltes Rastelement 48 lösbar miteinander in Verbindung gebracht werden. Dabei kann bei der Kopplung der beiden Strukturen 24, 141 im Prinzip gleichzeitig auch eine Kopplung des Antriebskopplungsmittels 134, insbesondere seines Kopplungskopfs 176 und Kopplungshals 178, mit dem Kopplungsgegenstück 60 hergestellt werden. Ferner erfolgt durch die strukturelle Kopplung auch ein im Wesnetliches simultanes Verbinden der im Stanzmittelmodul 110 vorgesehehen Kanäle 130, 131, 152, 153 mit entsprechenden Anschlussleitungen in der Stanzvorrichtung. Insgesamt wird also durch die modulare Bauweise des Stanzmittels 110 (Stanzkopfs) eine vereinfachte Austasuchbarkeit ermöglicht, dass das Stanzmittel 110 mit wenigen Handgriffen zwecks Betrieb an der Stanzvorrichtung 10 angebracht werden kann bzw. von dieser zwecks Wartung/Austausch entfernt werden kann.

## Patentansprüche

1. Stanzvorrichtung zum Verarbeiten von getrockneten auf einer Probenkarte (22) aufgetragenen Proben (36-1,..., 36-4), insbesondere von DNA enthaltenden Flüssigkeiten wie Blut, Speichel und dergleichen, umfassend:
eine Tragkonstruktion (24); wenigstens ein abnehmbar an der Tragkonstruktion (24) angebrachtes Stanzmittel (110) mit einem Stempel (132) und einem Unterwerkzeug (136), wobei der Stempel (132) zwischen einer vom Unterwerkzeug (136) entfernten Ruhestellung und einer dem Unterwerkzeug angenäherten Stanzstellung beweglich ist, und wobei das Stanzmittel (110) eine Aufnahmeöffnung (138) aufweist, in welche eine Probenkarte (22) mittels einer beweglichen Greifeinheit (300) der Stanzvorrichtung (10) einführbar und relativ zum Stanzmittel (110) positionierbar ist, einen an der Tragkonstruktion (24) befestigten Stanzantrieb (14), der mit dem Stempel (132) des Stanzmittels (110) koppelbar oder gekoppelt ist und durch den die Bewegung des Stempels (132) zwischen Ruhestellung und Stanzstellung angetrieben wird,
wobei das Stanzmittel (110) eine von der Stanzvorrichtung (10) gesonderte Struktur (141, 142, 144, 146) umfasst, an welcher der Stempel (132) und das Unterwerkzeug (136) angeordnet sind, wobei das Stanzmittel (110) mit seiner Struktur (141, 142, 144, 146) derart ausgeführt ist, dass es ein mit der Tragkonstruktion (24) der Stanzvorrichtung (10) und dem Stanzantrieb (14) koppelbares, austauschbares Modul bildet,
**dadurch gekennzeichnet, dass**
die Stanzvorrichtung (10) eine Absaugvorrichtung aufweist, mittels welcher beim Stanzen entstehende Staubpartikel im Bereich des Unterwerkzeugs (136) entfernbar sind, und ein Betätigungselement (26) aufweist, das zum Lösen eines Eingriffs zwischen dem Stanzmittel (110) und der Tragkonstruktion (24) betätigbar ist.

2. Stanzvorrichtung nach Anspruch 1, **dadurch gekennzeichnet, dass** das Unterwerkzeug (136) eine Durchgangsöffnung (166) aufweist, durch welche der Stempel (132) in seiner Stanzstellung hindurchtritt, derart, dass ein aus der Probenkarte (22) ausgestanztes Probenstück an einer Austrittsöffnung (156) in einen unterhalb des Stanzmittels (110) angeordneten Aufnahmebehälter (12) abgegeben werden kann.

3. Stanzvorrichtung nach Anspruch 2, **dadurch gekennzeichnet, dass** der Aufnahmebehälter (12) relativ zum Stanzmittel (110) beweglich ist, derart, dass eine einzelne von mehreren im Aufnahmebehälter (12) vorgesehenen Aufnahmevertiefungen (28) unterhalb der Durchgangsöffnung (166) angeordnet werden kann.

4. Stanzvorrichtung nach einem der vorhergehenden Ansprüche, **dadurch gekennzeichnet, dass** sie ferner eine Zuführeinrichtung für de-ionisierte Luft umfasst, mittels welcher de-ionisierte Luft in den Bereich des Unterwerkzeugs (136) insbesondere im Bereich der Austrittsöffnung (156) zuführbar ist.

5. Stanzvorrichtung nach einem der vorhergehenden Ansprüche, **dadurch gekennzeichnet, dass** in der Struktur (141, 142, 144, 146) des Stanzmittels (110) Absaugkanäle (130, 131) und Luftzufuhrkanäle (152, 153) voneinander getrennt ausgebildet sind mit jeweiligen Anschlussstellen (126, 128), welche im gekoppelten Zustand des Stanzmittels (110) an der Stanzvorrichtung (10) in Verbindung mit entsprechenden Absaugleitungen und Luftzuführleitungen der Stanzvorrichtung (10) stehen.

6. Stanzvorrichtung nach einem der vorhergehenden Ansprüche, **dadurch gekennzeichnet, dass** das Stanzmittel (110) und dessen Struktur (141, 142, 144, 146) derart ausgebildet sind, dass sie mittels einer im wesentlichen horizontal verlaufenden Verschiebung des Stanzmittels (110) relativ zur Stanzvorrichtung (10) mit der Stanzvorrichtung (10) , insbesondere mit dem Stanzantrieb (14) koppelbar sind.

7. Stanzvorrichtung nach Anspruch 5 und 6, **dadurch gekennzeichnet, dass** mittels der horizontalen Verschiebung ferner die Absaugkanäle (130, 131) bzw. Luftzuführkanäle (152, 153) des Stanzmittels (110) mit den entsprechenden Absaugleitungen (70) bzw. Luftzuführleitungen (72) der Stanzvorrichtung (10) koppelbar sind.

8. Stanzvorrichtung nach einem der vorhergehenden Ansprüche, **dadurch gekennzeichnet, dass** die Struktur (141) des Stanzmittels (110) eine Basis (142) umfasst, die im gekoppelten Zustand der Stanzvorrichtung (10) zugewandt ist, sowie einen mit der Basis (142) verbundenen, den Stempel (132) enthaltenden oberen Abschnitt (146) und einen mit der Basis (142) verbundenen, das Unterwerkzeug (136) enthaltenden unteren Abschnitt (144) aufweist, wobei die Aufnahmeöffnung (138) zwischen dem oberen und dem unteren Abschnitt (144, 146) ausgebildet ist und der obere und untere Abschnitt (144, 146) von der Basis (142) abstehen.

9. Stanzvorrichtung nach Anspruch 5 und 8, **dadurch gekennzeichnet, dass** die Absaugkanäle (130, 131) und die Luftzuführkanäle (152, 153) im unteren Abschnitt (144) oder/und in der Basis (142) ausgebildet sind, wobei vorzugsweise im unteren Abschnitt (144) die Absaugkanäle (131) oberhalb der Luftzufuhrkanäle (152) angeordnet sind.

10. Stanzvorrichtung nach Anspruch 9, **dadurch gekennzeichnet, dass** das Unterwerkzeug (136) in einer Hülse (168) aufgenommen ist, die am unteren Abschnitt (144) befestigt ist, wobei die Hülse (168) mit ihrer Oberseite eine Begrenzung des Absaugkanals (131) bildet und mit ihrer Unterseite eine Begrenzung des Luftzufuhrkanals (152) für deionisierte Luft bildet.

11. Dosiervorrichtung, insbesondere Pipettierautomat (500) mit einer Stanzvorrichtung (10) nach einem der Ansprüche 1 bis 10.

12. Dosiervorrichtung nach Anspruch 11, wobei an einem eine Greifeinheit (300) der Stanzvorrichtung (10) aufweisenden, beweglichen Träger (50) auch eine Pipettiervorrichtung (502) mit wenigstens einem Pipettierkanal (504) angebracht ist, oder wobei sie wenigstens zwei voneinander getrennte, bewegliche Träger aufweist, wobei an dem einen Träger die Greifeinheit der Stanzvorrichtung angeordnet ist und wobei an dem anderen Träger eine Pipettiervorrichtung mit wenigstens einem Pipettierkanal angeordnet ist.

## Claims

1. A punching device for processing dried samples (36-1,...,36-4) applied to a sample card (22), in particular of liquids containing DNA such as blood, saliva and the like, comprising:
a support structure (24);
at least one punching means (110) mounted removably on the support structure (24) and having a punch (132) and a lower die (136), wherein the punch (132) is movable between a rest position in which it is away from the lower die (136) and a punching position in which it is close to the lower die, and wherein the punching means (110) has a receiving opening (138) into which a sample card (22) is introducible by means of a movable gripper unit (300) of the punching device (10) and is positionable relative to the punching means (110),
a punching drive (14) which is mounted on the support structure (24) and which is couplable or coupled to the punch (132) of the punching means (110) and by way of which the movement of the punch (132) between the rest position and the punching position is driven,
wherein the punching means (110) comprises a structure (141, 142, 144, 146) separate from the punching device (10), the punch (132) and the lower die (136) being arranged on said separate structure (141, 142, 144, 146), wherein the punching means (110) with its structure (141, 142, 144, 146) is configured such that said punching means (110) forms an exchangeable module that is couplable to the support structure (24) of the punching device (10) and the punching drive (14),
**characterized in that**
the punching device (10) comprises a suction device, by means of which dust particles produced during punching are removable in the region of the lower die (136), and an actuating element (26) that can be actuated so that an engagement between the punching means (110) and the support structure (24) can be released.

2. The punching device as claimed in claim 1, **characterized in that** the lower die (136) has a through-passage opening (166) through which the punch (132) passes in its punching position, such that a sample piece punched out of the sample card (22) can be dispensed at an outlet opening (156) into a receiving container (12) arranged beneath the punching means (110).

3. The punching device as claimed in claim 2, **characterized in that** the receiving container (12) is movable relative to the punching means (110) such that an individual one of a plurality of receiving recesses (28) provided in the receiving container (12) can be arranged beneath the through-passage opening (166).

4. The punching device as claimed in one of the preceding claims, **characterized in that** it furthermore comprises a supply device for deionized air, by means of which deionized air is able to be supplied into the region of the lower die (136) in particular in the region of the outlet opening (156).

5. The punching device as claimed in one of the preceding claims, **characterized in that** suction channels (130, 131) and air supply channels (152, 153) are formed separately from one another in the structure (141, 142, 144, 146) of the punching means (110), with respective connecting points (126, 128) which, in the state in which the punching means (110) is coupled to the punching device (10), are connected to corresponding suction lines and air supply lines of the punching device (10).

6. The punching device as claimed in one of the preceding claims, **characterized in that** the punching means (110) and the structure (141, 142, 144, 146) thereof are formed such that they are couplable to the punching device (10), in particular to the punching drive (14), by means of a substantially horizontally extending movement of the punching means (110) relative to the punching device (10).

7. The punching device as claimed in claims 5 and 6, **characterized in that** by means of the horizontal movement, the suction channels (130, 131) or air supply channels (152, 153) of the punching means (110) are furthermore couplable to the corresponding suction lines (70) or air supply lines (72), respectively, of the punching device (10).

8. The punching device as claimed in one of the preceding claims, **characterized in that** the structure (141) of the punching means (110) comprises a base (142) which faces the punching device (10) in the coupled state, as well as an upper portion (146), connected to the base (142) and containing the punch (132), and a lower portion (144), connected to the base (142) and containing the lower die (136), wherein the receiving opening (138) is formed between the upper and the lower portions (144, 146) and the upper and lower portions (144, 146) project from the base (142).

9. The punching device as claimed in claims 5 and 8, **characterized in that** the suction channels (130, 131) and the air supply channels (152, 153) are formed in the lower portion (144) or/and in the base (142), wherein preferably the suction channels (131) are arranged above the air supply channels (152) in the lower portion (144).

10. The punching device as claimed in claim 9, **characterized in that** the lower die (136) is received in a sleeve (168) which is fastened to the lower portion (144), wherein the top side of the sleeve (168) forms a boundary of the suction channel (131) and the underside of the sleeve (168) forms a boundary of the air supply channel (152) for deionized air.

11. A metering device, in particular an automated pipetter (500), having a punching device (10) as claimed in one of claims 1 to 10.

12. The metering device as claimed in claim 11, wherein a pipetting device (502) having at least one pipetting duct (504) is also fitted on a movable support (50) having a gripper unit (300) of the punching device (10), or which has at least two movable supports which are separated from one another, wherein the gripper unit of the punching device is arranged on one support and a pipetting device having at least one pipetting duct is arranged on the other support.

## Revendications

1. Dispositif de découpage pour traiter des échantillons (36-1,..., 36-4) séchés déposés sur une carte d'échantillons (22), en particulier des liquides contenant de l'ADN, comme du sang, de la salive et autre, comprenant :
une construction porteuse (24) ; au moins un moyen de découpage (110) installé de manière amovible sur la construction porteuse (24) avec un poinçon (132) et un outil inférieur (136), dans lequel le poinçon (132) est mobile entre une position de repos éloignée de l'outil inférieur (136) et une position de découpage rapprochée de l'outil inférieur, et dans lequel le moyen de découpage (110) présente une ouverture de réception (138) dans laquelle une carte d'échantillons (22) est apte à être introduite à l'aide d'une unité de préhension mobile (300) du dispositif de découpage (10) et est apte à être positionnée par rapport au moyen de découpage (110), un entraînement de découpage (14) fixé à la construction porteuse (24), qui est apte à être couplé ou qui est couplé au poinçon (132) du moyen de découpage (110) et par lequel le déplacement du poinçon (132) entre position de repos et position de découpage est entraîné,,
dans lequel le moyen de découpage (110) comprend une structure (141, 142, 144, 146) distincte du dispositif de découpage (10), sur laquelle sont disposés le poinçon (132) et l'outil inférieur (136), dans lequel le moyen de découpage (110) avec la structure (141, 142, 144, 146) est réalisé de telle sorte qu'il forme un module échangeable apte à être couplé à la construction porteuse (24) du dispositif de découpage (10) et à l'entraînement de découpage (14),
**caractérisé en ce que** le dispositif de découpage (10) comporte un dispositif d'aspiration à l'aide duquel des particules de poussières se formant lors du découpage peuvent être éliminées dans la zone de l'outil inférieur (136), et comporte un élément d'actionnement (26) qui est apte à être actionné pour libérer une prise entre le moyen de découpage (110) et la construction porteuse (24).

2. Dispositif de découpage selon la revendication 1, **caractérisé en ce que** l'outil inférieur (136) présente une ouverture de passage (166) à travers laquelle le poinçon (132) passe, dans sa position de découpage, de telle sorte qu'une pièce d'échantillon découpée de la carte d'échantillons (22) puisse être déposée, à une ouverture de sortie (156), dans un récipient (12) disposé au-dessous du moyen de découpage (110).

3. Dispositif de découpage selon la revendication 2, **caractérisé en ce que** le récipient (12) est mobile par rapport au moyen de découpage (110) de telle sorte qu'un creux de réception (28) individuel, parmi plusieurs prévus dans le récipient (12), puisse être disposé au-dessous de l'ouverture de passage (166).

4. Dispositif de découpage selon l'une des revendications précédentes, **caractérisé en ce qu'**il comprend en outre un dispositif d'amenée pour de l'air déionisé à l'aide duquel de l'air déionisé peut être amené dans la zone de l'outil inférieur (136), en particulier dans la zone de l'ouverture de sortie (156).

5. Dispositif de découpage selon l'une des revendications précédentes, **caractérisé en ce que** dans la structure (141, 142, 144, 146) du moyen de découpage (110) sont formés séparément les uns des autres des canaux d'aspiration (130, 131) et des conduits d'amenée d'air (152, 153) avec des points de raccordement respectifs (126, 128) qui, à l'état couplé du moyen de découpage (110) sur le dispositif de découpage (10), communiquent avec des conduits d'aspiration et des conduits d'amenée d'air correspondants du dispositif de découpage (10).

6. Dispositif de découpage selon l'une des revendications précédentes, **caractérisé en ce que** le moyen de découpage (110) et la structure (141, 142, 144, 146) sont formés de manière à pouvoir être couplés au dispositif de découpage (10), en particulier à l'entraînement de découpage (14), à l'aide d'un coulissement sensiblement horizontal du moyen de découpage (110) par rapport au dispositif de découpage (10),.

7. Dispositif de découpage selon les revendications 5 et 6, **caractérisé en ce qu'**à l'aide du coulissement horizontal, en outre, les canaux d'aspiration (130, 131) et les canaux d'amenée d'air (152, 153) du moyen de découpage (110) sont aptes à être couplés respectivement aux conduits d'aspiration (70) et aux conduits d'amenée d'air (72) correspondants du dispositif de découpage (10).

8. Dispositif de découpage selon l'une des revendications précédentes, **caractérisé en ce que** la structure (141) du moyen de découpage (110) comprend une base (142) qui est tournée vers le dispositif de découpage (10), à l'état couplé, ainsi qu'une section supérieure (146) reliée à la base (142) et contenant le poinçon (132), et une section inférieure (144) reliée à la base (142) et contenant l'outil inférieur (136), dans lequel l'ouverture de réception (138) est formée entre les sections supérieure et inférieure (144, 146), et les sections supérieure et inférieure (144, 146) dépassent de la base (142).

9. Dispositif de découpage selon les revendications 5 et 8, **caractérisé en ce que** les canaux d'aspiration (130, 131) et les canaux d'amenée d'air (152, 153) sont formés dans la section inférieure (144) ou/et dans la base (142), dans lequel de préférence dans la section inférieure (144) les canaux d'aspiration (131) sont disposés au-dessus des canaux d'amenée d'air (152).

10. Dispositif de découpage selon la revendication 9, **caractérisé en ce que** l'outil inférieur (136) est reçu dans un manchon (168) qui est fixé à la section inférieure (144), dans lequel le manchon (168) forme avec son côté supérieur une délimitation du canal d'aspiration (131) et forme avec son côté inférieur une délimitation du canal d'amenée d'air (152) pour de l'air déionisé.

11. Dispositif de dosage, en particulier pipeteur automatique (500) avec un dispositif de découpage (10) selon l'une des revendications 1 à 10.

12. Dispositif de dosage selon la revendication 11, dans lequel sur un support mobile (50) comportant une unité de préhension (300) du dispositif de découpage (10) est également installé un pipeteur (502) avec au moins un canal de pipetage (504), ou qui comporte au moins deux supports mobiles séparés l'un de l'autre, dans lequel sur un support est disposée l'unité de préhension du dispositif de découpage (10) et dans lequel sur l'autre support est disposé un pipeteur automatique avec au moins un canal de pipetage.
